# EUROPEAN PATENT SPECIFICATION

(11) **EP 4 412 185 B1**
(45) Date of publication and mention of the grant of the patent: **28.01.2026**
(21) Application number: 24155358.5
(22) Date of filing: 01.02.2024
(51) Int. Cl.: H04L 67/145, H04W 4/80

(54) **CONDITIONAL REQUEST AND KEEP ALIVE**
BEDINGTE ANFRAGE UND KEEP-ALIVE
DEMANDE CONDITIONNELLE ET MAINTIEN DE CONNEXION

(30) Priority: 02.02.2023 FR 2300976
(43) Date of publication of application: 07.08.2024
(73) Proprietor: TOPPAN Security SAS, 75008 Paris (FR)
(72) Inventor: JOGAND-COULOMB, Fabrice, 13090 Aix en Provence (FR)
(74) Representative: Kramer Barske Schmidtchen Patentanwälte PartG mbB

(56) References cited:
- US-B1- 9 942 222

## Description

### BACKGROUND

Digital credentials are increasingly hosted in smart devices (e.g., smart phones, smart watches, and various other Internet-connected devices) and are becoming commonplace. Such digital credentials typically are mobile identity, mobile driver's license, vehicle registration, university degree but also vaccination passport, electronic visa, various kind of permits, birth certificates, and many more.

The verification of digital credentials is done electronically and typically requires the transfer of information. Modern solutions maximize privacy by, for example, relying on a data minimized request and selective disclosure for the response. A transaction may request for attributes from one kind of credentials or attributes for different kind of credentials.

This request-response approach typically implies establishing a communication channel.

US 9 942 222 B1 relates to authentication with a wearable device.

### SUMMARY

The invention is defined by the independent claims. Further developments of the invention are recited in the dependent claims.

In some examples, a system and method are provided for performing operations including establishing a communication channel between a mobile device and a reader. The operations include receiving, via the communication channel at a credential application executing on the mobile device, a request for a credential or attributes from a kind of credential. The operations include transmitting the response with the returned attributes or credentials from the mobile device to the reader via the communication channel. The operations include, after a first response may have been returned to conditionally keeping the communication channel active.

In some examples, the request is a first request, the credential or attributes from a kind of credential is a first credential or attributes from a kind of credential, and the first request includes a field indicating possibility of a second request that follows the first request. The second request is associated with a second credential or attributes from a second kind of credential which may or may not be associated with the mobile device.

In some examples, the operations for conditionally keeping the communication channel active include determining that a flag at transport layer (e.g., BLE broadcast) indicates to keep the channel active.

In some examples, the operations include, in response to determining that the field indicates that the second request is possible to be received after the first request, establishing a timeout period for closing the communication channel to prevent closing the communication channel until the timeout period elapses, the minimum timeout period being defined by the first request. In some examples, the operations include determining that the field fails to indicate that the second request is possible to be received after the first request, and in response to determining that the field fails to indicate that the second request is possible to be received after the first request, closing the communication channel after a default time period.

In some examples, the information for conditionally keeping the communication channel active is delivered as part of the reader authentication certificate. In response to determining that the field indicates that the second request is possible to be received after the first request, the operations include preventing closing the communication channel.

In some examples, the reader indicates to keep the communication channel active because a conditional subsequent request may be issued depending on the response to a previous request. For example, a first request is for attributes from an identity document and a second request is conditional to the country of the citizen and may be sent to request electronic visa.

In some examples, the reader indicates to keep the communication channel active because alternative credentials may apply and to improve the UX and reducing the time to transfer the request, the reader shortens the request to one kind or a few kinds of credential at a time instead of sharing a longer list of suitable credentials. For example, the operations include transmitting, to the reader, an empty document (or does not return the requested information or credentials), the empty document informing the reader that the requested information is unavailable on the mobile device. The operations include receiving, from the reader, the second request for the second credential or attribute of another credential in response to transmission of the empty document.

Various systems and methods for securely and efficiently exchanging credentials are described herein. The systems and methods establish a communication channel between a mobile device and a reader. The systems and methods establish a communication channel between a mobile device and a reader. The systems and methods receive, via the communication channel at a credential application executing on the mobile device, a request for a document. The systems and methods transmit the document from the mobile device to the reader via the communication channel and after the document is transmitted from the mobile device to the reader, condition keeping the communication channel active by the mobile device or credential application based on information received from the reader.

### BRIEF DESCRIPTION OF THE DRAWINGS

[Fig. 1] is a block diagram of an example document exchange system, according to some examples.
[Fig. 2], [Fig. 3], [Fig. 4] and [Fig. 5] illustrate example operations, inputs, and outputs of the document exchange system, according to some examples.
[Fig. 6] is a block diagram illustrating an example software architecture, which may be used in conjunction with various hardware architectures herein described.
[Fig. 7] is a block diagram illustrating components of a machine, according to some examples.

### DETAILED DESCRIPTION

Example methods and systems for a document exchange system are described. In the following description, for purposes of explanation, numerous specific details are set forth in order to provide a thorough understanding of example embodiments. It will be evident, however, to one of ordinary skill in the art that embodiments of the disclosure may be practiced without these specific details.

Typical identity documents, boarding documents, and various other documents are usually stored on or accessible using one or more credential applications. Such documents are usually exchanged or sent to a reader associated with an entity, such as a ticket collection agent or border control officer. To perform the exchange, the conventional approach involves a request for a document (e.g., a digital credential) or certain attribute(s) of a document or credential, being received by the credential application from the reader. After the document or attributes are returned from the credential application to the reader, the communication channel between the credential application and the reader is closed automatically or after some default period of time. However, in many cases, additional documentation may be needed by the reader.

For example, a vaccination certificate may need to be provided after a travel ticket containing information about a specific destination or origin has been returned from the credential application to the reader. Whether or not additional documentation needs to be sent from the credential application to the reader is unknown to the credential application and so the communication channel may be closed prematurely, such as after the default period of time elapses. The need for additional document(s) can depend on information obtained by the reader from previous documents, such as a first document. As a result, even the reader may not know whether or not additional documents are needed when the reader initially requests a given document from the credential application. In some cases, the reader may determine that there is a need for additional documentation after the default period of time elapses and after the communication channel has already been closed. In such cases, a new communication channel shall be set to complete the transaction. This typically results in a poor user experience.

One way to address this issue is for the reader to share a kind of elaborated query where the conditions are provided. For example the request for the ticket also includes that is the origin or destination is X or not Y or X1, X2, etc. then a vaccination passport for vaccine J is required. It could be even more elaborated. However, this makes the initial request longer to transmit which may result in a bad user experience (UX).

The disclosed embodiments provide an intelligent solution that addresses the above technical problems and challenges. Particularly, the disclosed technical solution provides a way for a reader to inform a credential application about a possible need for more information following a previous request for a given document (e.g., a digital credential or attribute of a credential). The credential application can then conditionally keep the communication channel active with the reader on the indication received from the reader about the possible need for the additional document. Namely, rather than randomly closing the communication channel after transmitting a requested document to the reader, the credential application examines information provided in a request for a document and/or a certificate associated with the reader to determine whether or not to keep the communication channel active. In this way, if the reader determines that the additional document is needed, the reader sends subsequent request while the communication channel remains active. This saves time and system resources which improves the overall user experience and functioning of the device.

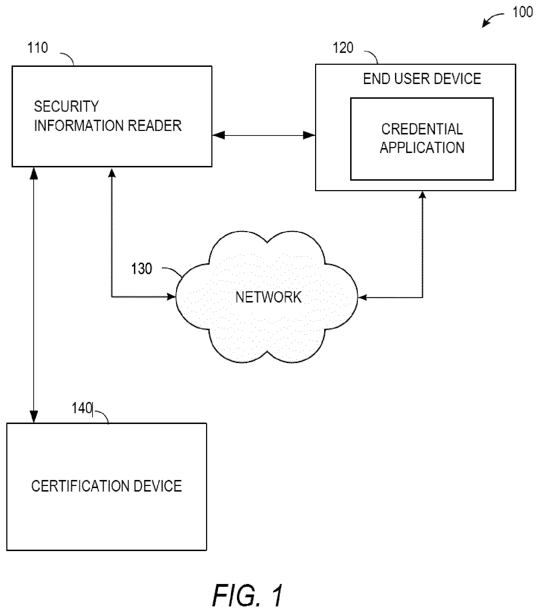

FIG. 1 is a block diagram showing an example document exchange system 100, according to various example embodiments. The document exchange system 100 can include an end user device 120 and a reader 110. The reader 110 can request and receive information including one or more credentials (e.g., identity or security documents) from the end user device 120. The reader request may include authentication which relies on certificates delivered to the reader typically by a trusted party to the credential application.

The end user device 120 and the reader 110 can be communicatively coupled via electronic messages (e.g., packets exchanged over the Internet, BLE, UWB, WiFi direct or any other protocol). The reader 110 can include any one or a combination of an IoT device, a database, a website, a server hosting a website at a URL address, a physical access control device, logical access control device, governmental entity device, ticketing event device, or residential smart lock and/or other Bluetooth or NFC or UWB based smart device. In some examples, the reader 110 can be part of the end user device 120. In some examples, the reader 110 is external to the end user device 120 and communicates with the end user device 120 over a network 130.

In some examples, the communication channel can be initiated from a bar code or quick reference code that contains the minimum information to establish transport. The bar code can be presented to the end user device 120 by the reader 110 or by another source. For example, is may contain the necessary BLE information to ensure the right devices can establish communication.

With more certainty that the communication channel would remain active not only allows to conditionally request subsequent information but it also allows to deliver a better UX when different document can be suitable for the reader. In that case instead of a request containing all alternatives and that can take quite some time to transmit, a request for a first suitable document is sent and subsequent is sent only when no or empty response is receive. For example, the reader 110 can receive an empty or invalid credential as the response from the end user device 120 to the request for certain credentials. Namely, the reader 110 can request a passport and the end user device 120 may lack access to a passport for the individual person associated with the end user device 120. In these circumstances, the end user device 120 can transmit back an empty document or empty message informing the reader 110 that the end user device 120 does not have access to the requested passport or that the passport is unavailable on the end user device 120. In such cases, the reader 110 can transmit a request for the additional credentials (e.g., a request for a an alternate form of identity document) to the end user device 120 (e.g., the credential application installed on the end user device 120). The end user device 120 can transmit back the requested additional credentials, such as through the same communication channel previously established to send the initial set of credentials. Namely, without terminating or closing the communication channel with the reader 110, the end user device 120 can receive requests for additional credentials or documents and can provide such additional credentials or documents back to the reader 110.

As used herein, the term "client device" may refer to any machine that interfaces to a communications network (such as network 130) to exchange identity document information (e.g., credentials) with the reader 110, a physical mechanism that protects an asset, resource or secure location, another end user device 120 or any other component to obtain access to the asset or resource protected by the reader 110. A end user device 120 may be, but is not limited to, a mobile phone, desktop computer, laptop, portable digital assistant (PDA), smart phone, a wearable device (e.g., a smart watch), tablet, ultrabook, netbook, laptop, multi-processor system, microprocessor-based or programmable consumer electronics, or any other communication device that a user may use to access the network 130.

The reader 110 (and/or the end user device 120) can include or be associated with a physical access control device that can include or be associated with an access reader device connected to a physical resource (e.g., a gate mechanism or backend server) that controls the physical resource (e.g., door locking mechanism). The physical resource associated with the physical access control device can include a door lock, an ignition system for a vehicle, an entryway into a physical space or mode of transportation (e.g., bus, train, airplane, boat, spaceship, and so forth), or any other device that grants or denies access to a secure resource or component, such as a physical component, and that can be operated to grant or deny access to the secure resource or component. As another example, in the case of a passport control system, the physical access control device can deny access, in which case the gate to enter a given territory or country remains closed, or can grant access, in which case the gate opens automatically to allow the individual to enter the country or territory.

As another example, the received document can be a foreign passport (e.g., passport of a different country from that which the reader 110 controls access or entry into). In such cases, the host can request a VISA document to be received after the foreign passport.

In general, the reader 110 can include one or more of a memory, a processor, one or more antennas, a communication module, a network interface device, a user interface, and a power source or supply. The memory of the reader 110 can be used in connection with the execution of application programming or instructions by the processor of the reader 110, and for the temporary or long-term storage of program instructions or instruction sets and/or credential or authorization data, such as credential data, credential authorization data, or access control data or instructions. For example, the memory can contain executable instructions that are used by the processor to run other components of reader 110 and/or to make access determinations based on credential or authorization data and/or to determine whether and which additional documents or credentials are needed to authorize access to a secure area or a protected resource.

The memory of the reader 110 can comprise a computer-readable medium that can be any medium that can contain, store, communicate, or transport data, program code, or instructions for use by or in connection with reader 110. The computer-readable medium can be, for example, but is not limited to, an electronic, magnetic, optical, electromagnetic, infrared, or semiconductor system, apparatus, or device. More specific examples of suitable computer-readable medium include, but are not limited to, an electrical connection having one or more wires or a tangible storage medium such as a portable computer diskette, a hard disk, a random access memory (RAM), a read-only memory (ROM), an erasable programmable read-only memory (EPROM or Flash memory), Dynamic RAM (DRAM), any solid-state storage device, in general, a compact disc read-only memory (CD-ROM), or other optical or magnetic storage device.

The processor of the reader 110 can correspond to one or more computer processing devices or resources. For instance, the processor can be provided as silicon, as a Field Programmable Gate Array (FPGA), an Application-Specific Integrated Circuit (ASIC), any other type of Integrated Circuit (IC) chip, a collection of IC chips, or the like. As a more specific example, the processor can be provided as a microprocessor, Central Processing Unit (CPU), or plurality of microprocessors or CPUs that are configured to execute instruction sets stored in an internal memory and/or memory of the reader 110.

The antenna of the reader 110 can correspond to one or multiple antennas and can be configured to provide for wireless communications between reader 110 and a credential or key device (e.g., end user device 120). The antenna can be arranged to operate using one or more wireless communication protocols and operating frequencies including, but not limited to, the IEEE 802.15.1, Bluetooth, Bluetooth Low Energy (BLE), near field communications (NFC), ZigBee, GSM, CDMA, Wi-Fi, RF, UWB, and the like. By way of example, the antenna(s) can be RF antenna(s), and as such, may transmit/receive RF signals through free space to be received/transferred by a credential or key device having an RF transceiver.

A communication module of the reader 110 can be configured to communicate according to any suitable communications protocol with one or more different systems or devices either remote or local to reader 110, such as one or more end user devices 120. The communication module can detect a flag at a transport layer between the end user device 120 and the reader 110. In response to detecting the flag, the end user device 120 keeps the communication channel active between the end user device 120 and the reader 110.

The network interface device of the reader 110 includes hardware to facilitate communications with other devices, such as one or more client devices 120, over a communication network, such as network 130, utilizing any one of a number of transfer protocols (e.g., frame relay, internet protocol (IP), transmission control protocol (TCP), user datagram protocol (UDP), hypertext transfer protocol (HTTP), etc.). Example communication networks can include a local area network (LAN), a wide area network (WAN), a packet data network (e.g., the Internet), mobile telephone networks (e.g., cellular networks), Plain Old Telephone (POTS) networks, wireless data networks (e.g., IEEE 802.11 family of standards known as Wi-Fi, IEEE 802.16 family of standards known as WiMax), IEEE 802.15.4 family of standards, and peer-to-peer (P2P) networks, among others. In some examples, network interface devices can include an Ethernet port or other physical jack, a Wi-Fi card, a Network Interface Card (NIC), a cellular interface (e.g., antenna, filters, and associated circuitry), or the like. In some examples, network interface devices can include a plurality of antennas to wirelessly communicate using at least one of single-input multiple-output (SIMO), multiple-input multiple-output (MIMO), or multiple-input single-output (MISO) techniques.

A user interface of the reader 110 can include one or more input devices and/or display devices. Examples of suitable user input devices that can be included in the user interface include, without limitation, one or more buttons, a keyboard, a mouse, a touch-sensitive surface, a stylus, a camera, a microphone, etc. Examples of suitable user output devices that can be included in the user interface include, without limitation, one or more LEDs, an LCD panel, a display screen, a touchscreen, one or more lights, a speaker, and so forth. It should be appreciated that the user interface can also include a combined user input and user output device, such as a touch-sensitive display or the like.

The network 130 may include, or operate in conjunction with, an ad hoc network, an intranet, an extranet, a virtual private network (VPN), a LAN, a wireless network, a wireless LAN (WLAN), a wide area network (WAN), a wireless WAN (WWAN), a metropolitan area network (MAN), BLE, UWB, the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network and the coupling may be a Code Division Multiple Access (CDMA) connection, a Global System for Mobile communications (GSM) connection, or other type of cellular or wireless coupling. In this example, the coupling may implement any of a variety of types of data transfer technology, such as BLE, Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, fifth generation wireless (5G) networks, Universal Mobile Telecommunications System (UMTS), High Speed Packet Access (HSPA), Worldwide Interoperability for Microwave Access (WiMAX), Long Term Evolution (LTE) standard, others defined by various standard setting organizations, other short range or long range protocols, or other data transfer technology.

In some embodiments, the end user device 120 implements a credential application. The credential application may run on the end user device 120 and can be accessed by a user of the end user device 120. The credential application locally stores the digital credentials in a (secure) storage of the end user device 120 accessible to the credential application. Upon request, the credential application returns the consented digital credentials to the reader 110 over the communication session or channel established.

In some examples, the end user device 120 establishes a communication channel or session with the reader 110. In some cases, the reader 110 establishes the communication channel or initiates establishment of the channel with the end user device 120, such as in response to detecting the end user device 120 within a threshold proximity to the reader 110. This can be performed in end user device 120 scanning a barcode or other identifier of the reader 110 or by simply communicating securely or un-securely with the reader 110. In response, the end user device 120 and the reader 110 open a channel of communication that is secure and encrypted. In some examples, the end user device 120 receives an identifier of the reader 110. The end user device 120 communicates with the certification device 140 to provide the identifier of the reader 110. The certification device 140 can provide an authentication certificate associated with the reader 110. In some examples, the end user device 120 can verify the authenticity of the reader 110 based on the authentication certificate received from the certification device 140 or based on information received in the request or message from the reader 110.

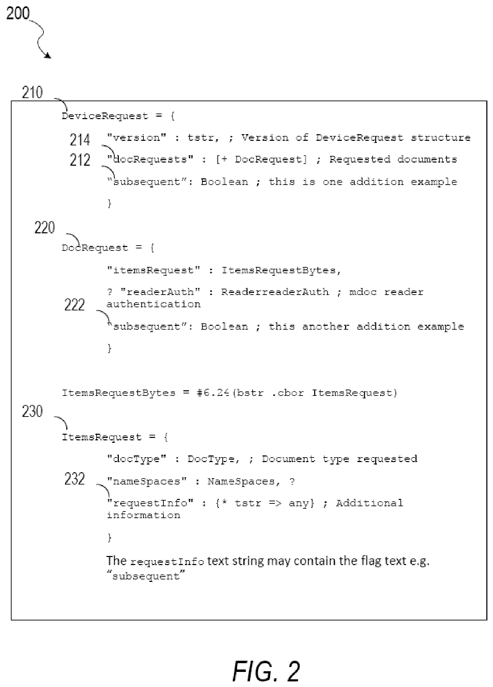

In some cases, the reader authentication certificate, delivered as part of the document request portion 220, can include a field to indicate to the credential app the need to keep the communication channel active, discussed below in connection with FIG. 2. In other cases of Fig 2, a Boolean field may be used as part of the request structure. While implementations discussed herein pertain to the use of a Boolean field, any other identifier or indicator can be provided with the same functionality. The end user device 120 can selectively, automatically, and conditionally close or keep the communication channel open with the end user device 120 based on the Boolean field 212 or 222. For example, if the Boolean field 212 or 222 is asserted, the end user device 120 can keep the communication channel open after transmitting a requested document to the reader 110, such as for a specified minimum timeout period or interval. The timeout period or interval can be default or can be specified in the authentication certificate. If the Boolean field 212 or 222 is de-asserted, the end user device 120 can close the communication channel or session with the reader 110 immediately or after a specified minimum timeout period following transmission of the requested documents to the reader 110.

Namely, after setting up the communication channel, the reader 110 transmits a request for a document (e.g., digital credential) from the end user device 120. In some cases, as part of generating the request, the reader 110 accesses a list of commonly requested documents. The reader 110 selects an identifier of the most commonly requested document from the list. The reader 110 can provide the identifier in the request for a document from the end user device 120.

In some examples, the reader 110 generates a message or request 200, as shown in FIG. 2. The request can include a device request portion 210, a document request portion 220, and/or an item request portion 230. The device request portion 210 can include the identifier of the document 214 being requested which can correspond to the document request portion 220 and the item request portion 230. The device request portion 210 can also include a Boolean field 212 (or other indicator or identifier) that indicates to the end user device 120 whether to keep the communication channel alive or open. Specifically, the reader 110 can determine that one or more additional documents may be needed after receiving the document corresponding to the identifier of the document or item request portion 230. In such cases, the reader 110 can assert the Boolean field 212 to instruct the end user device 120 to not close the communication channel and to keep the communication channel open. If the Boolean field 212 is de-asserted, the end user device 120 can search for the document corresponding to the document indicated in the item request portion 230 and transmit the document back to the reader 110 via the established communication channel. After transmitting the requested document, the end user device 120 can close or terminate the communication channel or session immediately or after a default timeout period or interval. The Boolean field 212 can be indicative of whether a subsequent or additional request for additional documents will be made by the reader 110 following the receipt of the document associated with the identifier of the document 230.

The end user device 120 can use the identifier of the document specified in the item request portion 230 to search for and access the document using the credential application of the end user device 120. In some cases, the end user device 120 retrieves the requested document from a secure local storage or can access a remote server to retrieve the requested document. The end user device 120 can transmit back to the reader 110 the requested document. After transmitting the requested document, the end user device 120 can determine whether the Boolean field 212 is asserted or de-asserted to conditionally close the communication channel. If the Boolean field 212 is de-asserted indicating that a subsequent request is not forthcoming, the end user device 120 closes the communication session immediately or after a default timeout period. If the Boolean field 212 is asserted indicating that a subsequent request is possible, the end user device 120 maintains the communication channel or session open to allow the reader 110 to transmit an additional request for additional documents without having to re-establish a new communication channel or session. In some examples, the end user device 120 keeps the communication session or channel open for a timeout period specified by the Boolean field 212. If an additional request for additional documents is not received within the interval of time associated with the timeout period, the end user device 120 automatically closes the communication channel.

For example, the identifier of the document specified in the item request portion 230 can correspond to a passport document. The reader 110 can receive the passport document from the end user device 120. The reader 110 can determine, based on processing the received passport document, that the passport document is foreign or associated with a different country than the country corresponding to the reader 110. In such cases, the reader 110 can transmit a request for a VISA document (e.g., additional credential) to the end user device 120. Because the Boolean field 212 was asserted, the end user device 120 is prevented from closing the communication channel, which allows the request for the VISA document to be sent via the same previously established communication channel without having to set up a new communication channel or session. This improves the overall efficiency of operating the device and saves system resources.

As another example, the identifier of the document specified in the item request portion 230 can correspond to a boarding pass to board a vehicle. The reader 110 can receive the boarding pass from the end user device 120. The reader 110 can determine, based on processing the received boarding pass, that a vaccination certificate is needed to be provided for the final destination identified in the boarding pass. In such cases, the reader 110 can transmit a request for a vaccination certificate (e.g., additional credential) to the end user device 120 for the individual identified in the boarding pass. Because the Boolean field 212 was asserted, the request for the vaccination certificate can be sent via the same previously established communication channel without having to set up a new communication channel or session. This improves the overall efficiency of operating the device and saves system resources.

As another example, the identifier of the document specified in the item request portion 230 can correspond to a boarding pass to board a vehicle. The reader 110 can receive the boarding pass from the end user device 120. The reader 110 can determine, based on processing the received boarding pass, that the individual person identified on the boarding pass is a minor whose age is below a threshold. In such cases, the reader 110 can transmit a request for a parent authorization (e.g., additional credential) to the end user device 120 for the individual identified in the boarding pass. Because the Boolean field 212 was asserted, the request for the parent authorization can be sent via the same previously established communication channel without having to set up a new communication channel or session. This improves the overall efficiency of operating the device and saves system resources.

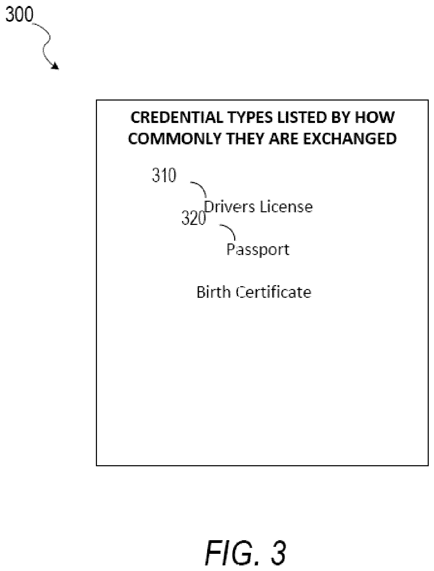

As another example, the reader to ensure a good UX for most, may implement a strategy to keep the request short to reduce the time to send. In that strategy, the reader may start with the most popular doc then sends a subsequent request until a suitable document is received. For example, the identifier of the document specified in the item request portion 230 can correspond to a passport document. The reader 110 can receive an empty document from the end user device 120 indicating that the passport document is unavailable on the end user device 120. The reader 110 can determine, based on accessing the list of commonly exchanged documents, that a government issued identification card is the next most commonly requested document following the passport document. For example, as shown in FIG. 3, a list 300 of commonly requested document types can be accessed by the reader 110. The first document type 310 on the list 300 can correspond, for example, to a driver's license. In such cases, the reader 110 can first request the driver's license to be received from the end user device 120 as the driver's license type of document is first on the list 300. If the reader 110 receives an empty document from the end user device 120, the reader 110 can request the second type of document 320 (e.g., passport) that is on the list 300 as the additional credential or document. In response, the reader 110 can transmit a request for a government-issued identification card (e.g., additional credential) to the end user device 120. Because the Boolean field 212 was asserted and the communication channel maintained active, the request for the government-issued identification card can be sent via the same previously established communication channel without having to set up a new communication channel or session. This improves the overall efficiency of operating the device and saves system resources.

In an example, after the reader 110 receives the document corresponding to a first request from the end user device 120, the reader 110 can determine that an additional document is needed to gain entry to the secure asset or protected resource. In response, the reader 110 generates a second (subsequent) request that includes a document request portion 220 and associated item request portion 230. The document request portion 220 and/or the item request portion 230 can identify the additional document or credential that is needed and can include a subsequent Boolean field 222. The subsequent Boolean field 222 functions in a similar way as the Boolean field 212 to inform the end user device 120 whether to conditionally close the communication channel or keep the communication channel open. The end user device 120 again searches for and accesses the additional document using the credential application of the end user device 120. In some cases, the end user device 120 retrieves the requested additional document from a secure local storage or can access a remote server to retrieve the requested additional document. The end user device 120 can transmit back to the reader 110 the requested additional document. After transmitting the requested additional document, the end user device 120 can determine whether the field 222 is asserted or de-asserted to conditionally keep the communication channel active. If the field 222 is de-asserted indicating that a subsequent request is not forthcoming, the end user device 120 closes the communication session immediately or after a default timeout period. If the Boolean field 222 is asserted indicating that a subsequent request is possible, the end user device 120 maintains the communication channel or session open to allow the reader 110 to transmit an additional request for additional documents without having to re-establish a new communication channel or session. In some examples, the end user device 120 keeps the communication session or channel open for a timeout period specified by the field 222. If an additional request for additional documents is not received within the interval of time associated with the timeout period, the end user device 120 automatically closes the communication channel.

In some cases, the reader 110 provides a list of items being requested as part of the item request portion 230. The item request portion 230 can include a requested information portion 232 with a Boolean flag or field that indicates to the end user device 120 whether or not to close the communication channel after the requested items are provided to the reader 110.

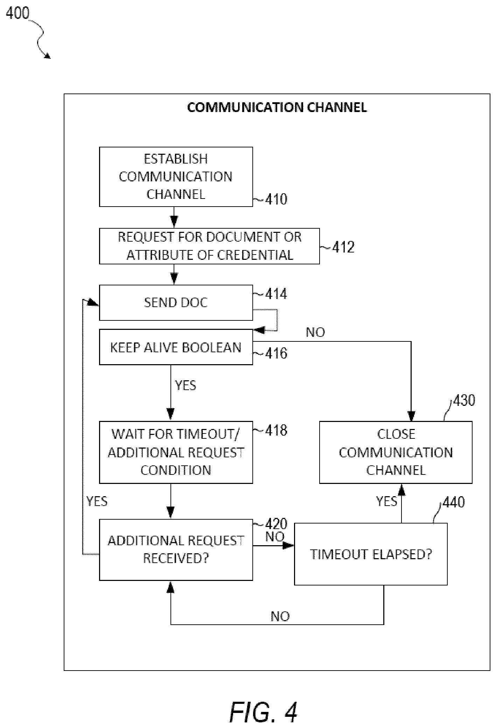

FIG. 4 is a flowchart illustrating example process 400 of the document exchange system 100, according to example embodiments. The process 400 may be embodied in computer-readable instructions for execution by one or more processors such that the operations of the process 400 may be performed in part or in whole by the functional components of the document exchange system 100, such as the end user device 120 and/or the reader 110; accordingly, the process 400 is described below by way of example with reference thereto. However, in other embodiments, at least some of the operations of the process 400 may be deployed on various other hardware configurations. Some or all of the operations of process 400 can be in parallel, out of order, or entirely omitted.

At operation 410, the end user device 120 or reader 110 establishes a communication session or channel with the reader 110 or end user device 120. This can take place in response to the end user device 120 scanning a barcode associated with the reader 110 and/or in response to bringing the end user device 120 close enough to the reader 110 to allow the devices to communicate via a BLE or NFC connection. In some embodiments, the reader transport may have information about keeping the communication channel active. In some other embodiments such information may be communicated at operation 412.

At operation 412, the reader 110 selects a document to request from the end user device 120 and transmits a request to the end user device 120 via the communication channel established at operation 410. In some cases, the reader 110 selects attributes of a credential to send to the end user device 120.

At operation 414, the end user device 120 searches or accesses or retrieves the document identified in the request received from the reader 110 or corresponding to the attribute(s) of the credential received in the request. The end user device 120 transmits the requested document back to the reader 110 via the communication channel established at operation 410. After sending the document to the reader 110, the end user device 120 determines whether a keep alive Boolean field is asserted at operation 416. The keep alive Boolean field may be provided as part of the request for the document received at operation 412 and/or from an authentication certification associated with the reader 110 received from the certification device 140.

If the keep alive Boolean field is asserted, the end user device 120 performs operation 418. If de-asserted, disconnect as usual. If the keep alive Boolean field is de-asserted in a subsequent request, the end user device 120 immediately performs operation 430. At operation 430, the end user device 120 closes the communication channel established at operation 410, such as immediately after completing operation 414 or after a specified time interval elapses.

At operation 418, the end user device 120 waits for a timeout period (e.g., which may be specified in the request received from the reader 110 and/or specified in the authentication certificated associated with the reader 110). The end user device 120 determines at operation 420 whether an additional request for additional documents has been received from the reader 110. If so, the end user device 120 returns back to operation 414 to provide the requested additional documents to the reader 110 via the communication channel established previously at operation 410. If an additional request for additional documents has not yet been received, the end user device 120 determines at operation 440 whether the timeout period set at operation 418 has elapsed. If the timeout period set at operation 418 has elapsed, the end user device 120 performs operation 430 to close or terminate the communication session established at operation 410. If the timeout period set at operation 418 has not yet elapsed, the end user device 120 returns to operation 420 to determine whether an additional request for additional documents has been received.

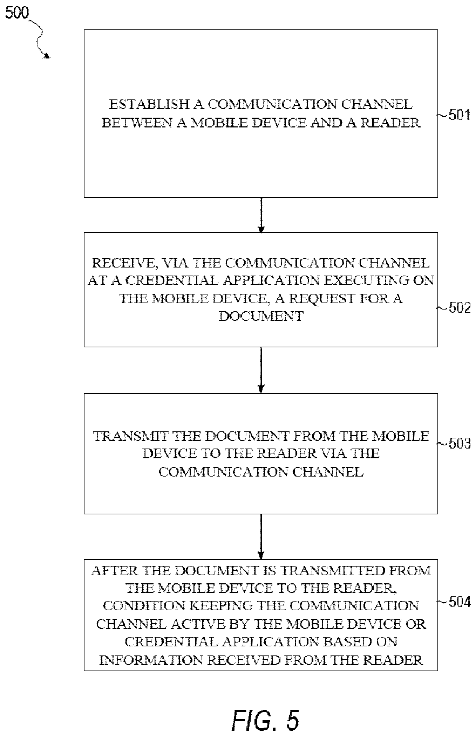

FIG. 5 is a flowchart illustrating example process 500 of the document exchange system 100, according to example embodiments. The process 500 may be embodied in computer-readable instructions for execution by one or more processors such that the operations of the process 500 may be performed in part or in whole by the functional components of the document exchange system 100; accordingly, the process 500 is described below by way of example with reference thereto. However, in other embodiments, at least some of the operations of the process 500 may be deployed on various other hardware configurations. Some or all of the operations of process 500 can be in parallel, out of order, or entirely omitted.

At operation 501, the document exchange system 100 establishes a communication channel between a mobile device and a reader, as discussed above.

At operation 502, the document exchange system 100 receives, via the communication channel at a credential application executing on the mobile device, a request for a document associated with the mobile device or attributes of the document, as discussed above.

At operation 503, the document exchange system 100 transmits the document from the mobile device to the reader via the communication channel, as discussed above.

At operation 504, after the document is transmitted from the mobile device to the reader, the document exchange system 100 conditionally keeps the communication channel active by the mobile device or credential application based on information received from the reader, as discussed above.

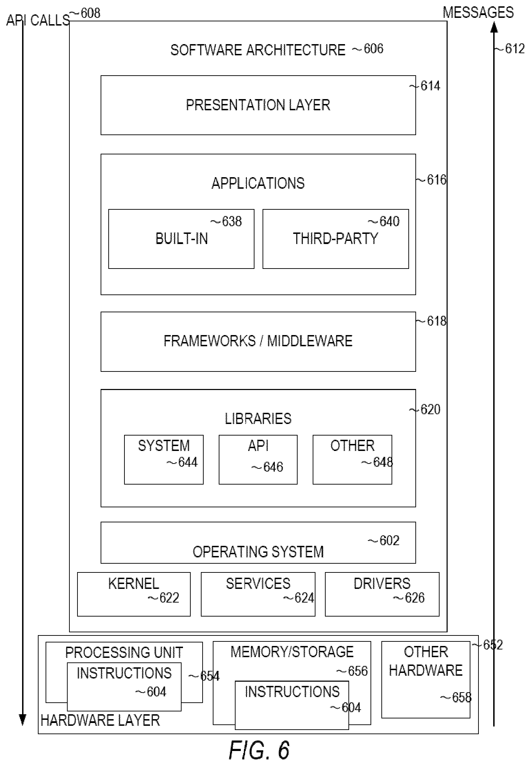

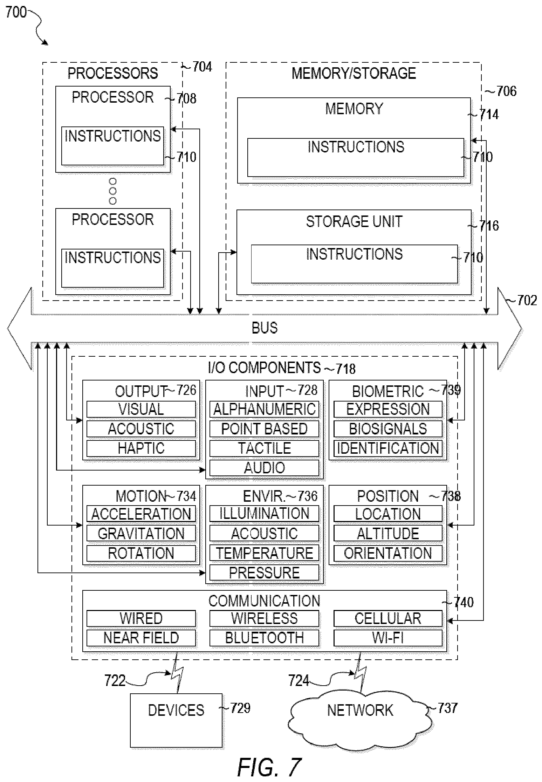

FIG. 6 is a block diagram illustrating an example software architecture 606, which may be used in conjunction with various hardware architectures herein described. FIG. 6 is a non-limiting example of a software architecture and it will be appreciated that many other architectures may be implemented to facilitate the functionality described herein. The software architecture 606 may execute on hardware such as machine 700 of FIG. 7 that includes, among other things, processors 704, memory 714, and input/output (I/O) components 718. A representative hardware layer 652 is illustrated and can represent, for example, the machine 700 of FIG. 7. The representative hardware layer 652 includes a processing unit 654 having associated executable instructions 604. Executable instructions 604 represent the executable instructions of the software architecture 606, including implementation of the methods, components, and so forth described herein. The hardware layer 652 also includes memory and/or storage devices memory/storage 656, which also have executable instructions 604. The hardware layer 652 may also comprise other hardware 658. The software architecture 606 may be deployed in any one or more of the components shown in FIG. 1.

In the example architecture of FIG. 6, the software architecture 606 may be conceptualized as a stack of layers where each layer provides particular functionality. For example, the software architecture 606 may include layers such as an operating system 602, libraries 620, frameworks/middleware 618, applications 616, and a presentation layer 614. Operationally, the applications 616 and/or other components within the layers may invoke API calls 608 through the software stack and receive messages 612 in response to the API calls 608. The layers illustrated are representative in nature and not all software architectures have all layers. For example, some mobile or special purpose operating systems may not provide a frameworks/middleware 618, while others may provide such a layer. Other software architectures may include additional or different layers.

The operating system 602 may manage hardware resources and provide common services. The operating system 602 may include, for example, a kernel 622, services 624, and drivers 626. The kernel 622 may act as an abstraction layer between the hardware and the other software layers. For example, the kernel 622 may be responsible for memory management, processor management (e.g., scheduling), component management, networking, security settings, and so on. The services 624 may provide other common services for the other software layers. The drivers 626 are responsible for controlling or interfacing with the underlying hardware. For instance, the drivers 626 include display drivers, camera drivers, BLE drivers, UWB drivers, Bluetooth^{®} drivers, flash memory drivers, serial communication drivers (e.g., Universal Serial Bus (USB) drivers), Wi-Fi^{®} drivers, audio drivers, power management drivers, and so forth depending on the hardware configuration.

The libraries 620 provide a common infrastructure that is used by the applications 616 and/or other components and/or layers. The libraries 620 provide functionality that allows other software components to perform tasks in an easier fashion than to interface directly with the underlying operating system 602 functionality (e.g., kernel 622, services 624 and/or drivers 626). The libraries 620 may include system libraries 644 (e.g., C standard library) that may provide functions such as memory allocation functions, string manipulation functions, mathematical functions, and the like. In addition, the libraries 620 may include API libraries 646 such as media libraries (e.g., libraries to support presentation and manipulation of various media format such as MPREG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 620 may also include a wide variety of other libraries 648 to provide many other APIs to the applications 616 and other software components/devices.

The frameworks/middleware 618 (also sometimes referred to as middleware) provide a higher-level common infrastructure that may be used by the applications 616 and/or other software components/devices. For example, the frameworks/middleware 618 may provide various graphic user interface functions, high-level resource management, high-level location services, and so forth. The frameworks/middleware 618 may provide a broad spectrum of other APIs that may be utilized by the applications 616 and/or other software components/devices, some of which may be specific to a particular operating system 602 or platform.

The applications 616 include built-in applications 638 and/or third-party applications 640. Examples of representative built-in applications 638 may include, but are not limited to, a contacts application, a browser application, a book reader application, a location application, a media application, a messaging application, and/or a game application. Third-party applications 640 may include an application developed using the ANDROID^{™} or IOS^{™} software development kit (SDK) by an entity other than the vendor of the particular platform, and may be mobile software running on a mobile operating system such as IOS^{™}, ANDROID^{™}, WINDOWS^{®} Phone, or other mobile operating systems. The third-party applications 640 may invoke the API calls 608 provided by the mobile operating system (such as operating system 602) to facilitate functionality described herein.

The applications 616 may use built-in operating system functions (e.g., kernel 622, services 624, and/or drivers 626), libraries 620, and frameworks/middleware 618 to create UIs to interact with users of the system. Alternatively, or additionally, in some systems, interactions with a user may occur through a presentation layer, such as presentation layer 614. In these systems, the application/component "logic" can be separated from the aspects of the application/component that interact with a user.

FIG. 7 is a block diagram illustrating components of a machine 700, according to some example embodiments, able to read instructions from a machine-readable medium (e.g., a machine-readable storage medium) and perform any one or more of the methodologies discussed herein. Specifically, FIG. 7 shows a diagrammatic representation of the machine 700 in the example form of a computer system, within which instructions 710 (e.g., software, a program, an application, an applet, an app, or other executable code) for causing the machine 700 to perform any one or more of the methodologies discussed herein may be executed. The machine 700 may be an example of the reader 110, end user device 120, and/or certification device 140.

As such, the instructions 710 may be used to implement devices or components described herein. The instructions 710 transform the general, non-programmed machine 700 into a particular machine 700 programmed to carry out the described and illustrated functions in the manner described. In alternative embodiments, the machine 700 operates as a standalone device or may be coupled (e.g., networked) to other machines. In a networked deployment, the machine 700 may operate in the capacity of a server machine or a client machine in a server-client network environment, or as a peer machine in a peer-to-peer (or distributed) network environment. The machine 700 may comprise, but not be limited to, a server computer, a client computer, a personal computer (PC), a tablet computer, a laptop computer, a netbook, a STB, a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 710, sequentially or otherwise, that specify actions to be taken by machine 700. Further, while only a single machine 700 is illustrated, the term "machine" shall also be taken to include a collection of machines that individually or jointly execute the instructions 710 to perform any one or more of the methodologies discussed herein.

The machine 700 may include processors 704, memory/storage 706, and I/O components 718, which may be configured to communicate with each other such as via a bus 702. In an example embodiment, the processors 704 (e.g., a CPU, a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 708 and a processor that may execute the instructions 710. The term "processor" is intended to include multi-core processors 704 that may comprise two or more independent processors (sometimes referred to as "cores") that may execute instructions contemporaneously. Although FIG. 7 shows multiple processors 704, the machine 700 may include a single processor with a single core, a single processor with multiple cores (e.g., a multi-core processor), multiple processors with a single core, multiple processors with multiple cores, or any combination thereof.

The memory/storage 706 may include a memory 714, such as a main memory, or other memory storage, instructions 710, and a storage unit 716, both accessible to the processors 704 such as via the bus 702. The storage unit 716 and memory 714 store the instructions 710 embodying any one or more of the methodologies or functions described herein. The instructions 710 may also reside, completely or partially, within the memory 714, within the storage unit 716, within at least one of the processors 704 (e.g., within the processor's cache memory), or any suitable combination thereof, during execution thereof by the machine 700. Accordingly, the memory 714, the storage unit 716, and the memory of processors 704 are examples of machine-readable media.

The I/O components 718 may include a wide variety of components to receive input, provide output, produce output, transmit information, exchange information, capture measurements, and so on. The specific I/O components 718 that are included in a particular machine 700 will depend on the type of machine. For example, portable machines such as mobile phones will likely include a touch input device or other such input mechanisms, while a headless server machine will likely not include such a touch input device. It will be appreciated that the I/O components 718 may include many other components that are not shown in FIG. 7. The I/O components 718 are grouped according to functionality merely for simplifying the following discussion and the grouping is in no way limiting. In various example embodiments, the I/O components 718 may include output components 726 and input components 728. The output components 726 may include visual components (e.g., a display such as a plasma display panel (PDP), a LED display, a LCD, a projector, or a cathode ray tube (CRT)), acoustic components (e.g., speakers), haptic components (e.g., a vibratory motor, resistance mechanisms), other signal generators, and so forth. The input components 728 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components (e.g., a microphone), and the like.

In further example embodiments, the I/O components 718 may include biometric components 739, motion components 734, environmental components 736, or position components 738 among a wide array of other components. For example, the biometric components 739 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components 734 may include acceleration sensor components (e.g., accelerometer), gravitation sensor components, rotation sensor components (e.g., gyroscope), and so forth. The environmental components 736 may include, for example, illumination sensor components (e.g., photometer), temperature sensor components (e.g., one or more thermometer that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 738 may include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 718 may include communication components 740 operable to couple the machine 700 to a network 737 or devices 729 via coupling 724 and coupling 722, respectively. For example, the communication components 740 may include a network interface component or other suitable device to interface with the network 737. In further examples, communication components 740 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 729 may be another machine or any of a wide variety of peripheral devices (e.g., a peripheral device coupled via a USB).

Moreover, the communication components 740 may detect identifiers or include components operable to detect identifiers. For example, the communication components 740 may include RFID tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 740, such as location via Internet Protocol (IP) geo-location, location via Wi-Fi^{®} signal triangulation, location via detecting an NFC beacon signal that may indicate a particular location, and so forth.

### Glossary:

"CARRIER SIGNAL" in this context refers to any intangible medium that is capable of storing, encoding, or carrying transitory or non-transitory instructions for execution by the machine, and includes digital or analog communications signals or other intangible medium to facilitate communication of such instructions. Instructions may be transmitted or received over the network using a transitory or non-transitory transmission medium via a network interface device and using any one of a number of well-known transfer protocols.

"COMMUNICATIONS NETWORK" in this context refers to one or more portions of a network that may be an ad hoc network, an intranet, an extranet, a VPN, a LAN, a BLE network, a UWB network, a WLAN, a WAN, a WWAN, a metropolitan area network (MAN), the Internet, a portion of the Internet, a portion of the PSTN, a plain old telephone service (POTS) network, a cellular telephone network, a wireless network, a Wi-Fi^{®} network, another type of network, or a combination of two or more such networks. For example, a network or a portion of a network may include a wireless or cellular network and the coupling may be a Code Division Multiple Access (CDMA) connection, a Global System for Mobile communications (GSM) connection, or other type of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard setting organizations, other long range protocols, or other data transfer technology.

"MACHINE-READABLE MEDIUM" in this context refers to a component, device, or other tangible media able to store instructions and data temporarily or permanently and may include, but is not limited to, RAM, ROM, buffer memory, flash memory, optical media, magnetic media, cache memory, other types of storage (e.g., Erasable Programmable Read-Only Memory (EEPROM)) and/or any suitable combination thereof. The term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions (e.g., code) for execution by a machine, such that the instructions, when executed by one or more processors of the machine, cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" excludes signals per se.

"COMPONENT" in this context refers to a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing certain operations and may be configured or arranged in a certain physical manner. In various example embodiments, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein.

A hardware component may also be implemented mechanically, electronically, or any suitable combination thereof. For example, a hardware component may include dedicated circuitry or logic that is permanently configured to perform certain operations. A hardware component may be a special-purpose processor, such as a FPGA or an ASIC. A hardware component may also include programmable logic or circuitry that is temporarily configured by software to perform certain operations. For example, a hardware component may include software executed by a general-purpose processor or other programmable processor. Once configured by such software, hardware components become specific machines (or specific components of a machine) uniquely tailored to perform the configured functions and are no longer general-purpose processors. It will be appreciated that the decision to implement a hardware component mechanically, in dedicated and permanently configured circuitry, or in temporarily configured circuitry (e.g., configured by software) may be driven by cost and time considerations. Accordingly, the phrase "hardware component"(or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time.

Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In embodiments in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output.

Hardware components may also initiate communications with input or output devices and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of a method may be performed by one or more processors or processor-implemented components. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an API). The performance of certain of the operations may be distributed among the processors, not only residing within a single machine, but deployed across a number of machines. In some example embodiments, the processors or processor-implemented components may be located in a single geographic location (e.g., within a home environment, an office environment, or a server farm). In other example embodiments, the processors or processor-implemented components may be distributed across a number of geographic locations.

"PROCESSOR" in this context refers to any circuit or virtual circuit (a physical circuit emulated by logic executing on an actual processor) that manipulates data values according to control signals (e.g., "commands," "op codes," "machine code," etc.) and which produces corresponding output signals that are applied to operate a machine. A processor may, for example, be a CPU, a RISC processor, a CISC processor, a GPU, a DSP, an ASIC, a RFIC, or any combination thereof. A processor may further be a multi-core processor having two or more independent processors (sometimes referred to as "cores") that may execute instructions contemporaneously.

Changes and modifications may be made to the disclosed embodiments without departing from the scope of the present disclosure. These and other changes or modifications are intended to be included within the scope of the present disclosure. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Thus, the following claims are hereby incorporated into the Detailed Description, with each claim standing on its own as a separate embodiment.

## Claims

1. A method comprising:
- establishing a communication channel between a mobile device (120) and a reader (110);
- receiving, via the communication channel at a credential application executing on the mobile device (120), a request for a document;
- transmitting the document from the mobile device (120) to the reader (110) via the communication channel; and
- after the document is transmitted from the mobile device (120) to the reader (110), conditioning keeping the communication channel active by the mobile device (120) or credential application based on information received from the reader (110),
wherein the request is a first request, wherein the document is a first document, and wherein the first request is associated with the information received from the reader, the information indicating a possibility of a subsequent request that follows the first request, the subsequent request being a request for a second document associated with the mobile device (120), wherein conditioning keeping the communication channel active comprises:
- determining that a field in the information received from the reader (110) indicates that the subsequent request is possible to be received after the first request; and
- in response to determining that the field indicates that the subsequent request is possible to be received after the first request, preventing closing the communication channel.

2. The method of claim 1, further comprising:
- accessing the document by the credential application executing on the mobile device (120).

3. The method of claim 1 or 2, further comprising:
- in response to determining that the field indicates that the subsequent request is possible to be received after the first request, establishing a minimum timeout period for closing the communication channel to ensure that the subsequent request can be conditionally delivered to the mobile device (120).

4. The method of claim 3, wherein the timeout period is defined by the first request.

5. The method of claim 3 or 4, further comprising:
- determining that the field fails to indicate that the subsequent request is possible to be received after the first request; and
- in response to determining that the field fails to indicate that the subsequent request is possible to be received after the first request, closing the communication channel after a default time period.

6. The method of any one of claims 3-5, wherein the information received from the reader is an authentication certificate, and conditioning keeping the communication channel active comprises:
- accessing the authentication certificate received from the reader (110);
- determining, based on the authentication certificate, the subsequent request is possible to be received after the first request; and
- in response to determining that the field indicates that the subsequent request is possible to be received after the first request, preventing closing the communication channel.

7. The method of any one of claims 3-6, further comprising:
- after the first document is transmitted from the mobile device (120) to the reader (110), receiving the subsequent request for the second document from the reader (120) via the communication channel that has been established prior to transmission of the first document;
- transmitting the second document from the mobile device (120) to the reader (110) via the communication channel; and
- after the second document is transmitted from the mobile device (120) to the reader (110), conditioning keeping the communication channel active by the mobile device (120) based on the subsequent request for the second document.

8. The method of any one of claims 3-7, further comprising:
- transmitting, to the reader (110), data informing the reader (110) that the first document is unavailable on the mobile device (120); and
- receiving, from the reader (110), the subsequent request for the second document in response to transmission of the data.

9. The method of claim 8, wherein the reader (110) accesses a list of credentials of different types, wherein the reader (110) selects the first document from the list of credentials of different types in response to determining that the first document is more commonly exchanged than the second document.

10. The method of claim 9, wherein the reader (110) selects the second document from the list of credentials of different types in response to determining that the first document is unavailable on the mobile device (120).

11. The method of any one of claims 3-10, further comprising:
- after the first document is transmitted from the mobile device (120) to the reader (110), the reader (110) processes information associated with the first document to determine whether to transmit the second request for the second document;
- transmitting the second document from the mobile device (120) to the reader (110) via the communication channel in response to receiving the subsequent request from the reader (110) based on the information associated with the first document processed by the reader (110); and
- after the second document is transmitted from the mobile device (120) to the reader (110), conditioning keeping the communication channel active by the mobile device (120) based on the second request for the second document.

12. A system (100; 700) comprising one or more processors (704) configured to perform operations comprising:
- means for establishing a communication channel between a mobile device (120) and a reader (110);
- means for receiving, via the communication channel at a credential application executing on the mobile device (120), a request for a document;
- means for transmitting the document from the mobile device (120) to the reader (110) via the communication channel; and
- means for after the document is transmitted from the mobile device (120) to the reader (110), conditioning keeping the communication channel active by the mobile device (120) or credential application based on information received from the reader (110),
wherein the request is a first request, wherein the document is a first document, and wherein the first request is associated with the information received from the reader, the information indicating a possibility of a subsequent request that follows the first request, the subsequent request being a request for a second document associated with the mobile device (120), wherein conditioning keeping the communication channel active comprises:
- determining that a field in the information received from the reader (110) indicates that the subsequent request is possible to be received after the first request; and
- in response to determining that the field indicates that the subsequent request is possible to be received after the first request, preventing closing the communication channel.

## Patentansprüche

1. Verfahren mit:
- Herstellen eines Kommunikationskanals zwischen einer mobilen Vorrichtung (120) und einem Lesegerät (110);
- Empfangen, über den Kommunikationskanal bei einer Berechtigungsnachweisanwendung, die auf der mobilen Vorrichtung (120) ausgeführt wird, einer Anforderung für ein Dokument;
- Senden des Dokuments von der mobilen Vorrichtung (120) zu dem Lesegerät (110) über den Kommunikationskanal; und
- nachdem das Dokument von der mobilen Vorrichtung (120) zu dem Lesegerät (110) gesandt wurde, bedingt Aktivhalten des Kommunikationskanals durch die mobile Vorrichtung (120) oder Berechtigungsnachweisanwendung basierend auf Information, die von dem Lesegerät (110) empfangen wird,
bei dem die Anforderung eine erste Anforderung ist, wobei das Dokument ein erstes Dokument ist und wobei die erste Anforderung der Information, die von dem Lesegerät empfangen wird, zugeordnet ist, wobei die Information eine Möglichkeit einer nachfolgenden Anforderung, die auf die erste Anforderung folgt, angibt, wobei die nachfolgende Anforderung eine Anforderung für ein zweites Dokument, das der mobilen Vorrichtung (120) zugeordnet ist, ist, wobei das bedingt Aktivhalten des Kommunikationskanals beinhaltet:
- Bestimmen, dass ein Feld in der von dem Lesegerät (110) empfangenen Information angibt, dass eine Möglichkeit besteht, dass die nachfolgende Anforderung nach der ersten Anforderung empfangen wird; und
- ansprechend auf eine Bestimmung, dass das Feld angibt, dass die Möglichkeit besteht, dass die nachfolgende Anforderung nach der ersten Anforderung empfangen wird, Verhindern eines Schließens des Kommunikationskanals.

2. Verfahren nach Anspruch 1, ferner mit:
- Zugreifen auf das Dokument durch die Berechtigungsnachweisanwendung, die auf der mobilen Vorrichtung (120) ausgeführt wird.

3. Verfahren nach Anspruch 1 oder 2, ferner mit:
- ansprechend auf eine Bestimmung, dass das Feld angibt, dass die nachfolgende Anforderung nach der ersten Anforderung empfangen werden kann, Herstellen einer minimalen Timeout-Periode zum Schließen des Kommunikationskanals zum Sicherstellen, dass die nachfolgende Anforderung bedingt zu der mobilen Vorrichtung (120) übermittelt werden kann.

4. Verfahren nach Anspruch 3, bei dem die Timeout-Dauer durch die erste Anforderung festgelegt wird.

5. Verfahren nach Anspruch 3 oder 4, ferner mit:
- Bestimmen, dass das Feld nicht angibt, dass die nachfolgende Anforderung nach der ersten Anforderung empfangen werden kann; und
- ansprechend auf eine Bestimmung, dass das Feld nicht angibt, dass die nachfolgende Anforderung nach der ersten Anforderung empfangen werden kann, Schließen des Kommunikationskanals nach einer Standardzeitdauer.

6. Verfahren nach einem der Ansprüche 3-5, bei dem die von dem Lesegerät empfangene Information ein Authentifizierungszertifikat ist und das bedingt Aktivhalten des Kommunikationskanals beinhaltet:
- Zugreifen auf das von dem Lesegerät (110) empfangene Authentifizierungszertifikat;
- Bestimmen, basierend auf dem Authentifizierungszertifikat, dass die nachfolgende Anforderung nach der ersten Anforderung empfangen werden kann; und
- ansprechend auf eine Bestimmung, dass das Feld angibt, dass die nachfolgende Anforderung nach der ersten Anforderung empfangen werden kann, Verhindern eines Schließens des Kommunikationskanals.

7. Verfahren nach einem der Ansprüche 3-6, ferner mit:
- nachdem das erste Dokument von der mobilen Vorrichtung (120) zu dem Lesegerät (110) gesandt wurde, Empfangen der nachfolgenden Anforderung für das zweite Dokument von dem Lesegerät (120) über den Kommunikationskanal, der vor einem Senden des ersten Dokuments hergestellt wurde;
- Senden des zweiten Dokuments von der mobilen Vorrichtung (120) zu dem Lesegerät (110) über den Kommunikationskanal; und
- nachdem das zweite Dokument von der mobilen Vorrichtung (120) zu dem Lesegerät (110) übertragen wurde, bedingt Aktivhalten des Kommunikationskanals durch die mobile Vorrichtung (120) basierend auf der nachfolgenden Anforderung für das zweite Dokument.

8. Verfahren nach einem der Ansprüche 3-7, ferner mit:
- Senden, zu dem Lesegerät (110), von Daten, die dem Lesegerät (110) mitteilen, dass das erste Dokument auf der mobilen Vorrichtung (120) nicht verfügbar ist; und
- Empfangen, von dem Lesegerät (110), der nachfolgenden Anforderung für das zweite Dokument ansprechend auf ein Senden der Daten.

9. Verfahren nach Anspruch 8, bei dem das Lesegerät (110) auf eine Liste von Berechtigungsnachweisen unterschiedlicher Typen zugreift, wobei das Lesegerät (110) ansprechend auf eine Bestimmung, dass das erste Dokument häufiger ausgetauscht wird als das zweite Dokument, das erste Dokument aus der Liste von Berechtigungsnachweisen unterschiedlicher Typen auswählt.

10. Verfahren nach Anspruch 9, bei dem das Lesegerät (110) das zweite Dokument ansprechend auf eine Bestimmung, dass das erste Dokument auf der mobilen Vorrichtung (120) nicht verfügbar ist, aus der Liste von Berechtigungsnachweisen unterschiedlicher Typen auswählt.

11. Verfahren nach einem der Ansprüche 3-10, ferner mit:
- nachdem das erste Dokument von der mobilen Vorrichtung (120) zu dem Lesegerät (110) gesandt wurde, Verarbeiten von Information in Zusammenhang mit dem ersten Dokument durch das Lesegerät (110) zum Bestimmen, ob die zweite Anforderung für das zweite Dokument zu senden ist;
- Senden des zweiten Dokuments von der mobilen Vorrichtung (120) zu dem Lesegerät (110) über den Kommunikationskanal ansprechend auf einen Empfang der nachfolgenden Anforderung von dem Lesegerät (110) basierend auf der Information, die dem ersten Dokument zugeordnet ist, die durch das Lesegerät (110) verarbeitet wird; und
- nachdem das zweite Dokument von der mobilen Vorrichtung (120) zu dem Lesegerät (110) gesandt wurde, bedingt Aktivhalten des Kommunikationskanals durch die mobile Vorrichtung (120) basierend auf der zweiten Anforderung für das zweite Dokument.

12. System (100, 700) mit einem oder mehreren Prozessoren (704), die dazu ausgebildet sind, Operationen durchzuführen, die aufweisen:
- ein Mittel zum Herstellen eines Kommunikationskanals zwischen einer mobilen Vorrichtung (120) und einem Lesegerät (110);
- ein Mittel zum Empfangen, über den Kommunikationskanal bei einer Berechtigungsnachweisanwendung, die auf der mobilen Vorrichtung (120) ausgeführt wird, einer Anforderung für ein Dokument;
- ein Mittel zum Senden des Dokuments von der mobilen Vorrichtung (120) zu dem Lesegerät (110) über den Kommunikationskanal; und
- ein Mittel zum, nachdem das Dokument von der mobilen Vorrichtung (120) zu dem Lesegerät (110) gesandt wurde, bedingt Aktivhalten des Kommunikationskanals durch die mobile Vorrichtung (120) oder Berechtigungsnachweisanwendung basierend auf Information, die von dem Lesegerät (110) empfangen wird,
bei dem die Anforderung eine erste Anforderung ist, wobei das Dokument ein erstes Dokument ist und wobei die erste Anforderung der Information, die von dem Lesegerät empfangen wird, zugeordnet ist, wobei die Information eine Möglichkeit angibt, dass eine nachfolgende Anforderung, die auf die erste Anforderung folgt, empfangen wird, wobei die nachfolgende Anforderung eine Anforderung für ein zweites Dokument, das der mobilen Vorrichtung (120) zugeordnet ist, ist, wobei das bedingt Aktivhalten des Kommunikationskanals beinhaltet:
- Bestimmen, dass ein Feld in der von dem Lesegerät (110) empfangenen Information angibt, dass die nachfolgende Anforderung nach der ersten Anforderung empfangen werden kann; und
- ansprechend auf eine Bestimmung, dass das Feld angibt, dass die nachfolgende Anforderung nach der ersten Anforderung empfangen werden kann, Verhindern eines Schließens des Kommunikationskanals.

## Revendications

1. Procédé comprenant les étapes consistant à :
- établir un canal de communication entre un dispositif mobile (120) et un lecteur (110) ;
- recevoir, via le canal de communication, d'une application de justificatif s'exécutant sur le dispositif mobile (120), une demande de document ;
- transmettre le document du dispositif mobile (120) au lecteur (110) via le canal de communication ; et
- après la transmission du document du dispositif mobile (120) au lecteur (110), conditionner le maintien du canal de communication actif par le dispositif mobile (120) ou l'application de justificatif en fonction des informations reçues du lecteur (110),
dans lequel la demande est une première demande, dans lequel le document est un premier document, et dans lequel la première demande est associée à l'information reçue du lecteur, l'information indiquant la possibilité d'une demande ultérieure qui suit la première demande, la demande ultérieure étant une demande d'un second document associé au dispositif mobile (120), dans lequel l'étape consistant à conditionner le maintien du canal de communication actif comprend :
- déterminer qu'un champ de l'information reçue du lecteur (110) indique qu'il est possible de recevoir la demande ultérieure après la première demande ; et
- en réponse à la détermination que le champ indique que la demande ultérieure peut être reçue après la première demande, empêcher la fermeture du canal de communication.

2. Procédé de la revendication 1, comprenant en outre :
- l'accès au document par l'application de justificatif s'exécutant sur le dispositif mobile (120).

3. Procédé de la revendication 1 ou 2, comprenant en outre :
- en réponse à la détermination que le champ indique que la demande ultérieure est possible à recevoir après la première demande, l'établissement d'un délai minimum pour fermer le canal de communication afin de s'assurer que la demande ultérieure peut être livrée conditionnellement au dispositif mobile (120).

4. Procédé de la revendication 3, dans lequel le délai d'attente est défini par la première demande.

5. Procédé de la revendication 3 ou 4, comprenant en outre :
- déterminer que le champ n'indique pas que la demande ultérieure peut être reçue après la première demande ; et
- en réponse à la détermination que le champ n'indique pas que la demande ultérieure peut être reçue après la première demande, fermer le canal de communication après une période de temps par défaut.

6. Procédé de l'une des revendications 3 à 5, dans lequel l'information reçue du lecteur est un certificat d'authentification, et le conditionnement du maintien du canal de communication actif comprend :
- accéder au certificat d'authentification reçu du lecteur (110) ;
- déterminer, sur la base du certificat d'authentification, si la demande ultérieure peut être reçue après la première demande ; et
- en réponse à la détermination que le champ indique que la demande ultérieure peut être reçue après la première demande, empêcher la fermeture du canal de communication.

7. Procédé de l'une quelconque des revendications 3 à 6, qui comprend en outre les étapes consistant à :
- après la transmission du premier document du dispositif mobile (120) au lecteur (110), recevoir la demande ultérieure du second document provenant du lecteur (120) via le canal de communication qui a été établi avant la transmission du premier document ;
- transmettre le second document du dispositif mobile (120) au lecteur (110) via le canal de communication ; et
- après la transmission du second document du dispositif mobile (120) au lecteur (110), conditionner le maintien du canal de communication actif par le dispositif mobile (120) en fonction de la demande ultérieure du second document.

8. Procédé de l'une quelconque des revendications 3 à 7, comprenant en outre l'étape consistant à :
- transmettre, au lecteur (110), des données informant le lecteur (110) que le premier document n'est pas disponible sur le dispositif mobile (120) ; et
- recevoir, de la part du lecteur (110), la demande ultérieure du second document en réponse à la transmission des données.

9. Procédé de la revendication 8, dans lequel le lecteur (110) accède à une liste de justificatifs de différents types, dans lequel le lecteur (110) sélectionne le premier document dans la liste de justificatifs de différents types en réponse à la détermination que le premier document est plus couramment échangé que le second document.

10. Procédé de la revendication 9, dans lequel le lecteur (110) sélectionne le second document dans la liste de justificatifs de différents types en réponse à la détermination que le premier document n'est pas disponible sur le dispositif mobile (120).

11. Procédé de l'une quelconque des revendications 3 à 10, comprenant en outre :
- après la transmission du premier document du dispositif mobile (120) au lecteur (110), le lecteur (110) traite les informations associées au premier document pour déterminer s'il faut transmettre la seconde demande pour le second document ;
- transmettre le second document du dispositif mobile (120) au lecteur (110) via le canal de communication en réponse à la réception de la demande ultérieure du lecteur (110) sur la base des informations associées au premier document traitées par le lecteur (110) ; et
- après la transmission du second document du dispositif mobile (120) au lecteur (110), conditionner le maintien du canal de communication actif par le dispositif mobile (120) sur la base de la seconde demande pour le second document.

12. Système (100 ; 700) comprenant un ou plusieurs processeurs (704) configurés pour effectuer des opérations comprenant :
- des moyens pour établir un canal de communication entre un dispositif mobile (120) et un lecteur (110) ;
- des moyens pour recevoir, via le canal de communication, à une application de justificatif s'exécutant sur le dispositif mobile (120), une demande de document ;
- des moyens pour transmettre le document du dispositif mobile (120) au lecteur (110) via le canal de communication ; et
- des moyens pour, après la transmission du document du dispositif mobile (120) au lecteur (110), conditionner le maintien du canal de communication actif par le dispositif mobile (120) ou l'application de justificatif sur la base des informations reçues du lecteur (110),
dans lequel la demande est une première demande, dans lequel le document est un premier document, et dans lequel la première demande est associée à l'information reçue du lecteur, l'information indiquant la possibilité d'une demande ultérieure qui suit la première demande, la demande ultérieure étant une demande d'un second document associé au dispositif mobile (120), dans lequel le conditionnement du maintien du canal de communication actif comprend :
- déterminer qu'un champ de l'information reçue du lecteur (110) indique qu'il est possible de recevoir la demande ultérieure après la première demande ; et
- en réponse à la détermination que le champ indique que la demande ultérieure peut être reçue après la première demande, empêcher la fermeture du canal de communication.
